# EUROPÄISCHE PATENTSCHRIFT

(11) **EP 0 927 731 B1**
(45) Veröffentlichungstag und Bekanntmachung des Hinweises auf die Patenterteilung: **01.09.2004**
(21) Anmeldenummer: 98121611.2
(22) Anmeldetag: 11.11.1998
(51) Int. Cl.: C08G 18/02, C08G 18/18, C07D 251/34

(54) **Verfahren zur Herstellung eines farbreduzierten isocyanuratgruppenhaltigen Polyisocyanats auf Basis von 1-Isocyanato-3,3,5-trimethyl-5-isocyanatomethylcyclohexan (IPDI)**
Process for the preparation of colour reduced isocyanurategroups containing polyisocyanates based on 1-isocyanate-3,3,5-trimethyl-5-isocyanatemethylcyclohexane(IPDI)
Procédé pour la préparation de polyisocyanates ayant une coloration réduite contenant des groupes d'isocyanurate à partir de 1-isocyanate-3,3,5-triméthyle-5-isocyanateméthylecyclohexane(IPDI)

(30) Priorität: 29.12.1997 DE 19758050
(43) Veröffentlichungstag der Anmeldung: 07.07.1999
(73) Patentinhaber: Degussa AG, 40474 Düsseldorf (DE)
(72) Erfinder: Kohlstruk, Stephan Dr., 45657 Recklinghausen (DE); Jansen, Volker, 47441 Moers (DE); Lomölder, Rainer Dr., 48153 Münster (DE)

(56) Entgegenhaltungen:
- EP-A- 0 645 372
- DE-A- 19 754 748
- US-A- 4 454 317

## Beschreibung

Die vorliegende Erfindung betrifft ein Verfahren zur kontinuierlichen Herstellung eines farbreduzierten isocyanuratgruppenhaltigen Polyisocyanats auf Basis von 1-Isocyanato-3,3,5-trimethyl-5-isocyanatomethylcyclohexan (IPDI).

Für hochwertige Ein- und Zweikomponenten Polyurethanlacke mit hoher Licht- und Wetterbeständigkeit werden als Isocyanatkomponente insbesondere Isocyanurat- und Uretdiongruppen enthaltende Polyisocyanatmischungen eingesetzt.

Die Herstellung dieser Produkte erfolgt vorzugsweise durch katalytische Oligomerisierung von (cyclo)aliphatischen Diisocyanaten, z. B. 1-Isocyanato-3,3,5-trimethyl-5-isocyanatomethylcyclohexan (IPDI) oder 1,6-Diisocyanatohexan (HDI).

Als Katalysatoren können beispielsweise tertiäre Amine, Phosphine, Alkaliphenolate, Aminosilane, quartäre Ammoniumhydroxide oder quartäre Ammoniumcarbonate eingesetzt werden. Gut geeignete Oligomerisierungskatalysatoren sind auch Hydroxide, Halogenide oder Carboxylate von Hydroxyalkylammonium-Ionen, Alkalimetallsalze oder Zinn-, Zink- oder Bleisalze von Alkylcarbonsäuren. In Abhängigkeit vom Katalysator ist auch die Verwendung von diversen Co-Katalysatoren wie z.B. OHfunktionalisierten Verbindungen oder Mannichbasen aus sekundären Aminen und Aldehyden bzw. Ketonen möglich.

Zur Oligomerisierung läßt man die (cyclo)aliphatischen Diisocyanate in Gegenwart des Katalysators, gegebenenfalls unter Verwendung von Lösungsmitteln und/oder Hilfsstoffen, bis zum Erreichen des gewünschten Umsatzes reagieren. Danach wird die Reaktion durch Desaktivierung des Katalysators abgebrochen und das überschüssige monomere Diisocyanat abdestilliert. Die Desaktivierung erfolgt thermisch oder durch Zusatz eines Katalysatorinhibitors. Je nach dem verwendeten Katalysatortyp und der Reaktionstemperatur erhält man Polyisocyanate mit unterschiedlichen Anteilen an Isocyanurat- bzw. Uretdiongruppen.

Die so hergestellten Produkte sind meist klare, aber in Abhängigkeit vom Katalysatortyp, der Diisocyanatqualität, der Reaktionstemperatur und der Reaktionsfahrweise mehr oder weniger stark gelbgefärbte Produkte.Für die Herstellung hochwertiger Polyurethanlacke sind jedoch Produkte mit einer möglichst niedrigen Farbzahl erwünscht.

Organische Polyisocyanate, wie z. B. aromatische, cycloaliphatische und aliphatische di- und höherwertige Polyisocyanate, können nach verschiedenartigen Verfahren hergestellt werden (Annalen der Chemie 562 (1949), Seiten 75ff). Technisch insbesondere bewährt hat sich die Herstellung von organischen Polyisocyanaten durch Phosgenierung von organischen Polyaminen zu den entsprechenden Polycarbaminsäurechloriden und deren thermische Spaltung in organische Polyisocyanate und Chlorwasserstoff, so daß lange Zeit ausschließlich dieses Herstellungsverfahren industriell genutzt wurde.

Problematisch bei dieser Verfahrensweise sind der hohe Umsatz von Chlor über Phosgen und Carbaminsäurechlorid in Chlorwasserstoff die Toxizität des Phosgens sowie die damit verbundenen kostenintensiven Sicherheitsvorkehrungen, die Korrosivität der Reaktionsmischung, die Labilität der üblicherweise eingesetzten Lösungsmittel und die Bildung von chlorhaltigen und chlorfreien Nebenprodukten, die die physikalischen Eigenschaften, wie z. B. die Farbe, die Viskosität und den Dampfdruck und chemischen Eigenschaften, wie z B. Reaktivität, Lagerbeständigkeit der Polyisocyanate mitbestimmen. Die bekannten Phosgenierungsprodukte von Anilin-Formaldehyd-Kondensaten (rohe Polyisocyanatgemische der Diphenylmethanreihe) beispielsweise enthalten eine Vielzahl von Verunreinigungen. Gemäß Chem. Soc. Rev. 3 (1974) S. 209 ff. handelt es sich hierbei vor allem um Chlor-enthaltende Verunreinigungen, die immer dann Aktivitätsschwankungen verursachen, wenn es sich um "leicht bewegliches", sogenanntes hydrolysierbares Chlor handelt.

Mit dem Ziel, die Chlorproblematik zu umgehen, wurden zahlreiche Versuche unternommen, organische Polyisocyanate ohne die Verwendung von Phosgen, d. h. nach phosgenfreien Verfahren, herzustellen.Nach Angaben der EP-B-0 126 299 (US-A-4 596 678), EP-B-0 126 300 (US-A-4 596 679) und EP-A-0 355 443 (US-A-5 087 739) können (cyclo)aliphatische Diisocyanate, wie 1,6-Hexamethylen-diisocyanat (HDI) und/oder isomere aliphatische Diisocyanate mit 6 Kohlenstoffatomen im Alkylenrest und 1-Isocyanato-3-isocyanato-methyl-3,5,5-trimethyl-cyclohexan (Isophoron-di-isocyanat bzw. IPDI) in Kreislaufverfahren hergestellt werden durch Umsetzung der (cyclo)aliphatischen Diamine mit Harnstoff und Alkoholen und gegebenenfalls N-unsubstituierten Carbaminsäureestern, Dialkylcarbonaten und anderen aus dem Reaktionsprozeß zurückgeführten Nebenprodukten zu (cyclo)aliphatischen Bis-carbaminsäureestern und deren thermische Spaltung in die entsprechenden Diisocyanate und Alkohole.

Die über das phosgenfreie Verfahren hergestellten Diisocyanate HDI und IPDI sollen im folgenden als HDI(Harnstoff) bzw. IPDI(Harnstoff) bezeichnet werden.

Ebenso wie die Produkte des Phosgenverfahrens sind auch die chlorfrei hergestellten Polyisocyanate problembehaftet. Es wird berichtet, daß nach phosgenfreiem Verfahren, insbesondere durch thermische Spaltung von (cyclo)aliphatischen Polycarbaminsäureestern erhältliche (cyclo)aliphatische Polyisocyanate nicht lagerbeständig sind ( EP 0645 372). Ihre Instabilität wird auf das Fehlen von hydrolysierbaren Chlorverbindungen und auf das Vorliegen von katalytisch wirkenden Verunreinigungen unbekannter Struktur zurückgeführt, die z. B. die Bildung von Oligomeren begünstigen. Bei tiefen Temperaturen, z. B. bei +5 °C und darunter, neigt z. B. Hexamethylen-diisocyanat (HDI(Harnstoff)) zur Bildung linearer HDI-Oligomerer mit Nylon-1-Struktur. Die resultierende Molekulargewichtserhöhung, verbunden mit einer Viskositätszunahme, kann zum Gelieren des Polyisocyanats, z. B. HDI(Harnstoff) führen. Derartige Produkte können nicht mehr reproduzierbar zu Polyisocyanat-Polyadditionsprodukten umgesetzt werden. Bei höheren Lagertemperaturen nimmt z. B. die Reaktivität des nach phosgenfreien Verfahren hergestellten HDI, insbesondere bei der mit quaternären Ammoniumhydroxidverbindungen katalysierten Trimerisierungsreaktion, stark ab. Man erhält intensiv gefärbte, Isocyanuratgruppen aufweisende Polyisocyanate, die insbesondere zur Verwendung als Lackrohstoff nicht mehr verwertbar sind.

Beide Prozesse zur Herstellung von organischen Polyisocyanaten, sowohl das Phosgenierungsverfahren als auch das phosgenfrei Verfahren über Polycarbaminsäureester, liefern also Produkte, die im Hinblick auf ihre Weiterverarbeitung zu Isocyanuratgruppen aufweisenden Polyisocyanatmischungen, wie sie in hochwertigen Ein- und Zweikomponenten Polyurethanlacken zur Anwendung kommen, problematisch sind. Ursache sind herstellungsbedingte Nebenprodukte vielfach unbekannter Struktur, oder auch ein herstellungsbedingter Mangel an bestimmten Nebenprodukten, die die Lagerbeständigkeit, Reaktivität und Farbe der Zusammensetzung beeinflussen und deren Auswirkungen bis in entsprechende Folgeprodukte reichen, so daß eine reproduzierbare und damit wirtschaftliche Verwendung erschwert wird.

Isocyanuratgruppenhaltiges Polyisocyanat auf Basis von 1-Isocyanato-3,3,5-trimethyl-5-isocyanatomethylcyclohexan (IPDI) wird technisch in einem kontinuierlichen Verfahren durch partielle Trimerisierung von IPDI und anschließende Abtrennung des überschüssigen Monomeren durch Kurzwegverdampfung gewonnen (EP-A 017 998, US 4 454 317). Die Trimersierung erfolgt in Gegenwart von quarternären Ammoniumcarboxylaten.

Bisher wurde zur technischen Trimerisierung von IPDI eine IPDI-Qualität eingesetzt, wie sie durch Phosgenierung von Isophorondiamin erhalten wird (DE-PS 12 02 785). Dieses Standard-IPDI enthält 100-400 mg/kg Gesamt-Chlor, davon beträgt der hydrolysierbare Chlorgehalt 80-200 mg/kg. Das monomerbefreite Endprodukt fällt als festes Harz an. 70%ige Lösungen dieses Harzes in Butylacetat sind klar und weisen eine leichte Gelbfärbung auf. Die Farbzahlen solcher Lösungen liegen in einem Spektrum zwischen 70 und 150 Hazen, ähnliche Farbzahlen werden aber auch in aromatenhaltigen Lösungsmitteln erhalten. Dabei beobachtet man bei einer Verfolgung der Produktion über einen längeren Zeitraum hinweg vor allem zwei Phänomene: Zum einen kommt es in der Produktionsanlage zu einem kontinuierlichen Aufbau von unerwünschten Ablagerungen undefinierter Zusammensetzung, die ein regelmäßiges Reinigen der Anlage notwendig machen, ein Prozess, welcher sich offensichtlich weder zeit- noch kostenneutral gestaltet. Zum anderen unterliegt die Farbqualität des Produktes einer schleichenden Verschlechterung, d.h. die Farbzahlen entwickeln sich entlang der Zeitachse in Richtung höherer Werte. Ein solcher Trend ist aber nachteilig, weil für die Herstellung hochwertiger Polyurethanlacke und -beschichtungen ausschließlich Produkte mit einer möglichst niedrigen Farbzahl erwünscht sind.

Es war daher die der Erfindung zugrundeliegende Aufgabe, ein Verfahren zur Herstellung eines isocyanuratgruppenhaltigen Polyisocyanats auf Basis von 1-Isocyanato-3,3,5-trimethyl-5-isocyanatomethylcyclohexan (IPDI) zur Verfügung zu stellen, welches nicht mit den angesprochenen Mängeln behaftet ist.

Überraschend konnte diese Aufgabe dadurch gelöst werden, daß zur Trimerisierung chlorarmes IPDI eingesetzt wurde, welches entweder durch eine aufwendige destillative Aufreinigung eines Standard-IPDI mit einem Gesamtchlorgehalt von 100-400 mg/kg, oder durch eine Abmischung des genannten Standard-IPDI mit IPDI(Harnstoff), oder auch durch einen vollständigen Ersatz von Standard-IPDI durch IPDI(Harnstoff) erhalten werden kann.

Gegenstand der Erfindung ist ein Verfahren zur Herstellung eines farbreduzierten isocyanuratgruppenhaltigen Polyisocyanats auf Basis von 1-Isocyanato-3,3,5-trimethyl-5-isocyanatomethylcyclohexan (IPDI) - mit einem Gehalt an freien NCO-Gruppen zwischen 10 und 22% und einem Restmonomergehalt von weniger als 0,7% - durch partielle Trimerisierung von IPDI in Gegenwart von Katalysatoren, dadurch gekennzeichnet, daß zur Trimerisierung chlorarmes IPDI mit einem Gesamtchlorgehalt von weniger als 80 mg/kg eingesetzt wird.

Bevorzugter Gegenstand der Erfindung ist ein Verfahren zur Herstellung eines farbreduzierten isocyanuratgruppenhaltigen Polyisocyanats auf Basis von 1-Isocyanato-3,3,5-trimethyl-5-isocyanatomethylcyclohexan (IPDI) - mit einem Gehalt an freien NCO-Gruppen zwischen 10 und 22% und einem Restmonomergehalt von weniger als 0,7% - durch partielle Trimerisierung von IPDI in Gegenwart von quarternären Ammoniumcarboxylaten und/oder -hydroxylaten der allgemeinen Formel 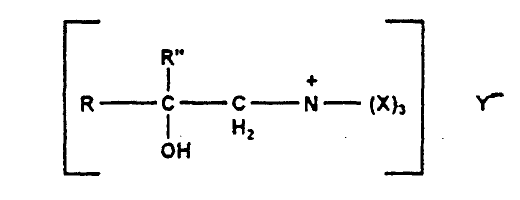 mit Y⁻= R'COO⁻ oder OH⁻
als Katalysator, in der X unabhängig voneinander gleiche oder verschiedene (cyclo)aliphatische, araliphatische oder heterocyclische Kohlenwasserstoffreste darstellen, wobei zwei Reste X mit dem quarternären Stickstoff einen gegebenenfalls ein oder mehrere Heteroatome enthaltenden Ring oder drei Reste X über ein gemeinsames Heteroatom mit dem quarternären Stickstoff einen bicyclischen Ring bilden können, R und R" unabhängig voneinander Wasserstoff oder ein Rest aus der Gruppe Alkyl, Cycloalkyl oder Aralkyl mit 1-12 Kohlenstoffatomen bedeuten, der Trimerisierungskatalysator in einer Menge von 0.02 bis 0.1 Gew.-% bezogen auf des Gewicht des IPDI eingesetzt wird und die Trimerisierung kontinuierlich in einer Reaktionsschlange in einem Temperaturbereich von 40-120°C, vorzugsweise 60-90°C, und nur bis zu einem Umsatz von 45% durchgeführt wird, die Reaktion abgebrochen und das unumgesetzte IPDI durch Dünnschichtverdampfung entfernt wird, dadurch gekennzeichnet, daß man zur Trimerisierung chlorarmes IPDI einsetzt.

Die Trimerisierung läßt sich unter innerhalb von 1-60 Minuten bei üblichen Reaktionsbedingungen durchführen. Es werden Verbindungen erhalten, die einen oder auch mehrere Isocyanuratringe habe. Verbindungen dieser Art sind in der Literatur beschrieben.

Besonders bevorzugt wird die Trimerisierung kontinuierlich wie unten beschrieben durchgeführt.

Erfindungsgemäß wird die Trimerisierung von chlorarmen IPDI in einer kontinuierlich arbeitenden Reaktionsschlange unter kontinuierlicher, gleichzeitiger Zudosierung des Diisocyanats und des Trimerisierungskatalysators bei 40-120°C und innerhalb von 1-7 Minuten durchgeführt. Eine Reaktionschlange mit kleinem Durchmesser führt zur Erreichung hoher Stömungsgeschwindigkeiten. Weiterhin ist es sehr vorteilhaft, das Diisocyanat/Katalysatorgemisch vor Eintritt in die Reaktionsschlange auf ca. 60°C zu erhitzen.

Die Reaktionsschlange kann beispielsweise auch in 2-3 Zonen geteilt sein, die gänzlich unabhängig voneinander geheizt oder gegebenenfalls gekühlt werden können, wobei in der ersten Zone das Vorwärmen der Einsatzstoffe - Diisocyanat und Katalysator - auf Reaktionstemperatur, in der zweiten Zone Aufrechterhaltung der Reaktionstemperatur durch teilweises Abführen der Reaktionstemperatur und in der dritten Zone die Abkühlung des Reaktionsgemisches erfolgt. Sollte das Reaktionsgemisch ohne Zwischenlagerung gleich der Dünnschichtdestillation zugeführt werden, kann die Abkühlung in der dritten Zone entfallen.

Entscheidend bei dieser kontinuierlichen Herstellung von trimerisierten Diisocyanaten ist der Einsatz einer chlorarmen Qualität. Überraschend kann so der kontinuierliche Aufbau von Ablagerungen in der Anlage, welche innnerhalb einer merklichen Schwankungsbreite eine Änderung der Anlagen- und Fahrparameter nach sich ziehen können, verhindert bzw. drastisch verzögert werden. Zudem erhält man bei Einsatz einer chlorarmen Qualität überraschend farbreduzierte Produkte. Dabei stellt sich z. B. beim Wechsel von Standard-IPDI auf IPDI(Harnstoff) ein interessanter Effekt ein: Die Farbzahl des Produktes steigt zunächst sprunghaft an, und sinkt dann auf einen gleichbleibend niedrigen Wert ab. Weiterhin entscheidend ist die Zudosierung des Katalysators. Es hat sich als besonders zweckmäßig erwiesen, die Einsatzprodukte vor Eintritt in die Reaktionsschlange intensiv zu mischen.

Die Temperatur der Reaktionsschlangenabschnitte wählt man zweckmäßigerweise so, daß die Vorwärmzone ca. 40-60°C, die Reaktionszone 70-120°C, vorzugsweise 70-90°C, und die Abkühlzone 20-40°C hat. Bei einem Durchsatz von 40-120 kg/h Diisocyanat pro 0,5 cm2 Reaktorquerschnitt läßt sich dann ein Diisocyanat-Umsatz von ca. 35-45% erzielen. Diese Temperaturbedingungen sind jedoch jeweils den erforderlichen Bedingungen für das zu trimerisierende Diisocyanat anzupassen.

Die Verweilzeit des Diisocyanat-Katalysator-Gemisches in der Reaktionsschlange beträgt ca. 1-7 Minuten. Innerhalb dieser Zeit wird ein Umsatz von ca. 35-45% realisiert. Zur Entfernung des nicht umgesetzten Diisocyanats wird das Reaktionsgemisch einer Kurzwegverdampfung unterzogen. Zur exakteren Dosierung der geringen Katalysatormengen und zur Erzeugung einer besseren Durchmischungsqualität kann es vorteilhaft sein, den Katalysator in einem geeigneten organischen Lösungsmittel zu lösen. Geeignet sind prinzipiell solche Lösungsmittel, in denen der Katalysator eine gute Löslichkeit hat. Vorzugsweise wird jedoch weitgehend auf den Einsatz von Lösungsmitteln verzichtet.

Die erfindungsgemäß hergestellten isocyanuratgruppenhaltigen Isocyanurate stellen nützliche Zwischenprodukte für Polyurethanbeschichtungen, z.B. Leder- und Textilbeschichtungen, und für Polyurethandispersionen und Klebstoffe dar, und sind besonders wertvoll als Polyisocyanat-Komponente in 1- und 2-Komponenten Polyurethansystemen für wetter- und lichtbeständige Polyurethanlacke.

### Beispiele

### A. Ausgangspolyisocyanate

### Polyisocyanat 1

Standard-IPDI mit einer Reinheit von > 99.5 %, einem NCO-Gehalt von 37.7%, einer Viskosität bei 23°C von 14 mPa·s und einem Gesamtchlor-Gehalt von ca. 180 mg/kg (davon ca. 120 mg/kg hydrolysierbares Chlor).

### Polyisocyanat 2

IPDI(Harnstoff), chlorfrei, mit einer Reinheit von > 99.6 %, einem NCO-Gehalt von 37.7% und einer Viskosität bei 23°C von 15 mPa·s.

### B. Kontinuierliche Herstellung

Die kontinuierliche Herstellung von partiell trimerisierten Diisocyanaten (bis zu ca. 35-45%igen Umsätzen) erfolgt in einem Rohrschlangenreaktor bei 60-120°C und mit einer Verweilzeit von ca. 1-7 Minuten. Der Reaktor besteht aus zwei Heizzonen und einer Kühlzone, wobei in der ersten Heizzone zunächst das Vorwärmen der Einsatzstoffe (Diisocyanat + Katalysator) auf Reaktionstemperatur erfolgt und in der zweiten Zone die Reaktionstemperatur durch teilweises Abführen der Reaktionswärme auf dieser Reaktionstemperatur gehalten wird.

Die in einem Vormischer intensiv durchmischten Diisocyanat/Katalysator-Gemische treten mit einer Temperatur von etwa 30°C in die erste Heizzone ein, die mit 80-90°C heißem Öl beheizt wird. Nach Durchströmen der ersten Heizzone sind die Diisocyanat/Katalysator-Gemische bei einer Verweilzeit von ca. 0.8-1.5 Minuten bereits zu 7-10% trimerisiert. Die weiter Umsetzung von 7-10% auf maximal 35-45% erfolgt in der zweiten Heizone bei 80-90°C. Hierbei sind ca. 84 kJ/kg Durchsatz abzuführen. Das Trimerisat hat nach Verlassen des Rohrschlangenreaktors einen NCO-Gehalt, der einem Umsatz von 35-45% entspricht, und wird direkt einer Monomerabtrennung durch Kurzwegverdampfung zugeführt. Die Abtrennung erfolgt kontinuierlich im Vakuum in einer Vor- und einer Hauptverdampferstufe, wobei die Destillate zurückgeführt und erneut zur Trimerisierung eingesetzt werden.

### C. Vergleich der Ergebnisse

Die Ausgangspolyisocyanate wurden wie unter B. beschrieben über einen Zeitraum von mehreren Tagen einer kontinuierlichen Trimerisierung unterzogen. Dabei wurde regelmäßig die Farbqualität des entmonomerisierten Produktes überprüft. Im Falle des chlorhaltigen Polyisocyanats 1 zeigt sich ein kontinuierlicher Farbaufbau, während sich die Farbqualität des aus Polyisocyanat 2 gewonnen Produktes im Trend zeitunabhängig verhält.

**Tab. 1**

| Umsetzung von Polyisocyanat 1 | | | |
|---|---|---|---|
| Zeit [d] | Durchschnittl. Eduktstrom [kg/h] | Durchschnittl. Produktstrom [kg/h] | Farbzahl [Hazen] |
| 1 | 28.2 | 8.5 | 73 |
| 2 | 30.7 | 9.2 | 82 |
| 4 | 27.9 | 8.4 | 96 |
| 6 | 33.1 | 9.9 | 119 |
| 8 | 32.2 | 9.7 | 136 |

**Tab. 2**

| Umsetzung von Polyisocyanat 2 | | | |
|---|---|---|---|
| Zeit [d] | Durchschnittl. Eduktstrom [kg/h] | Durchschnittl. Produktstrom [kg/h] | Farbzahl [Hazen] |
| 1 | 31.6 | 9.4 | 48 |
| 2 | 31.1 | 9.3 | 57 |
| 4 | 29.2 | 8.8 | 53 |
| 6 | 30.4 | 8.8 | 61 |
| 8 | 29.7 | 8.9 | 52 |

## Patentansprüche

1. Verfahren zur Herstellung eines farbreduzierten isocyanuratgruppenhaltigen Polyisocyanats auf Basis von 1-Isocyanato-3,3,5-trimethyl-5-isocyanatomethylcyclohexan (IPDI) - mit einem Gehalt an freien NCO-Gruppen zwischen 10 und 22% und einem Restmonomergehalt von weniger als 0,7% - durch partielle Trimerisierung von IPDI in Gegenwart von Katalysatoren, **dadurch gekennzeichnet, daß** zur Trimerisierung chlorarmes IPDI mit einem Gesamtchlorgehalt von weniger als 80 mg/kg eingesetzt wird.

2. Verfahren nach Anspruch 1,
**dadurch gekennzeichnet,**
**daß** als Katalysatoren tertiäre Amine Phosphine, Alkaliphenolate, Aminosilane, quartare Ammoniumhydroxide, quartäre Ammoniumcarbonate, Hydroxide, Halogenide oder Carboxylate von Hydroxyalkylammonium-Ionen, Alkalimetallsalze oder Zinn-, Zink- oder Bleisalze von Alkylcarbonsäuren eingesetzt werden.

3. Verfahren nach Anspruch 1-2,
**dadurch gekennzeichnet,**
**daß** die Herstellung in Gegenwart von quarternären Ammoniumcarboxylaten und/oder -hydroxylaten der allgemeinen Formel 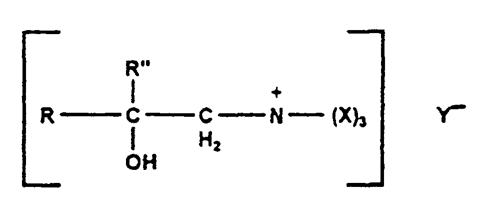 mit Y⁻=R'COO⁻ oder OH⁻
als Katalysator erfolgt, in der X unabhängig voneinander gleiche oder verschiedene (cyclo)aliphatische, araliphatische oder heterocyclische Kohlenwasserstoffreste darstellen, wobei zwei Reste X mit dem quarternären Stickstoff einen gegebenenfalls ein oder mehrere Heteroatome enthaltenden Ring oder drei Reste X über ein gemeinsames Heteroatom mit dem quarternären Stickstoff einen bicyclischen Ring bilden können, R und R'' unabhängig voneinander Wasserstoff oder ein Rest aus der Gruppe Alkyl, Cycloalkyl oder Aralkyl mit 1-12 Kohlenstoffatomen bedeuten, der Trimerisierungskatalysator in einer Menge von 0.02 bis 0.1 Gew.-% bezogen auf des Gewicht des IPDI eingesetzt wird und die Trimerisierung kontinuierlich in einer Reaktionsschlange in einem Temperaturbereich von 40-120°C und nur bis zu einem Umsatz von 45% durchgeführt, die Reaktion abgebrochen und das unumgesetzte IPDI durch Dünnschichtverdampfung entfernt wird.

4. Verfahren nach Anspruch 1-3,
**dadurch gekennzeichnet,**
**daß** zur Trimeriserung ein chlorarmes IPDI mit einem Gesamtchlorgehalt von weniger als 80 mg/kg eingesetzt wird, welches durch destillative Aufreinigung von Standard-IPDI erhalten wird.

5. Verfahren nach Anspruch 1-3,
**dadurch gekennzeichnet,**
**daß** zur Trimeriserung ein chlorarmes IPDI mit einem Gesamtchlorgehalt von weniger als 80 mg/kg eingesetzt wird, welches durch Abmischung von IPDI(Harnstoff) mit Standard-IPDI erhalten wird.

6. Verfahren nach Anspruch 1-3,
**dadurch gekennzeichnet,**
**daß** zur Trimerisierung IPDI(Harnstoff) eingesetzt wird.

## Claims

1. A process for preparing a reduced-colour isocyanurate-group-containing polyisocyanate on the basis of 1-isocyanato-3,3,5-trimethyl-5-isocyanatomethylcyclohexane (IPDI), having a free NCO group content of from 10 to 22% and a residual monomer content of less than 0.7%, by partial trimerization of IPDI in the presence of catalyst, **characterized in that** for the trimerization low-chlorine IPDI having a total chlorine content of less than 80 mg/kg is used.

2. A process according to claim 1, **characterized in that** tertiary amines, phosphines, alkali metal phenolates, amino silanes, quaternary ammonium hydroxides, quaternary ammonium carbonates, hydroxides, halides or carboxylates of hydroxyalkylammonium ions, alkali metal salts, or tin, zinc or lead salts of alkylcarboxylic acids are employed as catalyst.

3. A process according to either of claims 1 and 2, **characterized in that** the preparation takes place in the presence of quaternary ammonium carboxylates and/or hydroxides of the general formula 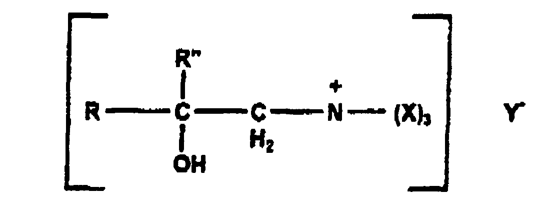 where Y⁻ = R'COO⁻ or OH⁻
as catalyst, in which the radicals X independently of one another are identical or different (cyclo)-aliphatic, araliphatic or heterocyclic hydrocarbon radicals and where two radicals X together with the quaternary nitrogen may form a ring with or without one or more heteroatoms, or three radicals X together with the quaternary nitrogen and via a heteroatom which they have in common may form a bicyclic ring, R and R" independently of one another are hydrogen or a radical from the group alkyl, cycloalkyl and aralkyl having 1-12 carbon atoms, employing the trimerization catalyst in an amount of from 0.02 to 0.1% by weight based on the weight of the IPDI and carrying out the trimerization continuously in a reaction coil within a temperature range of 40-120°C and only up to a conversion of 45%, terminating the reaction and removing the unreacted IPDI by thin-film evaporation.

4. A process according to any of claims 1-3, **characterized in that** for the trimerization a low-chlorine IPDI having a total chlorine content of less than 80 mg/kg is used which is obtained by distillative purification of standard IPDI.

5. A process according to any of claims 1-3, **characterized in that** for the trimerization a low-chlorine IPDI having a total chlorine content of less than 80 mg/kg is used which is obtained by blending IPDI(urea) with standard IPDI.

6. A process according to any of claims 1-3, **characterized in that** for the trimerization IPDI(urea) is used.

## Revendications

1. Procédé de préparation d'un polyisocyanate réduit en couleur, contenant des groupes d'isocyanurate, à base de 1-isocyanato-3,3,5-triméthyl-5-isocyanatométhylcyclohexane (IPDI) - comportant une teneur en groupes NCO libres comprise entre 10 et 22 % et une teneur en monomère résiduel de moins de 0,7 % - par trimérisation partielle du IPDI en présence de catalyseurs,
**caractérisé en ce que**
pour la trimérisation, on utilise de l'IPDI pauvre en chlore, comportant une teneur totale en chlore inférieure à 80 mg/kg.

2. Procédé selon la revendication 1,
**caractérisé en ce que**
comme catalyseurs, on fait intervenir les substances suivantes : amines tertiaires, phosphines, alkaliphénolates, aminosilanes, hydroxydes d'ammonium quaternaires, carbonates d'ammonium quaternaires : hydroxydes, halogénures ou carboxylates d'ions d'hydroxyalkylammonium : sels de métaux alcalins ou sels d'étain, de zinc ou de plomb d'acides alkylcarboniques.

3. Procédé selon la revendication 1-2,
**caractérisé en ce que**
la préparation s'effectue en présence de carboxylates et/ou hydroxylates d'ammonium quaternaires obéissant à la formule générale 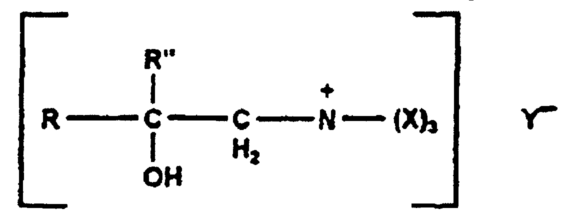 avec : Y⁻ = R'COO⁻ ou OH⁻
comme catalyseurs, dans lesquels X représente des atomes d'hydrocarbure (cyclo)aliphatiques, araliphatiques ou hétérocycliques, identiques ou différents entre eux, indépendants les uns des autres, deux restes X peuvent ici former, avec l'azote quaternaire, un anneau contenant le cas échéant un ou plusieurs hétéroatomes, ou encore trois restes X peuvent former, par l'intermédiaire d'un hétéroatome commun, un anneau bicyclique avec l'azote quaternaire, R' et R" désignent, indépendamment l'un de l'autre, de l'hydrogène ou un reste appartenant au groupe formé de l'alkyle, du cycloalkyle ou de l'aralkyle, comportant de 1 à 12 atomes de carbone, le catalyseur de trimérisation est utilisé en quantité de 0,02 à 0,1 % en poids par rapport au IPDI ; la trimérisation est effectuée de manière continue dans un serpentin de réaction, dans une gamme de température de 40 à 120°C, et elle n'est poursuivie que jusqu'à un taux de conversion de 45 %, à la suite de quoi la réaction est arrêtée et l'IPDI non converti est évacué par évaporation en couche mince.

4. Procédé selon la revendication 1-3,
**caractérisé en ce que**
pour la trimérisation, on fait intervenir de l'IPDI pauvre en chlore, comportant une teneur totale en chlore inférieure à 80 mg/kg, lequel est obtenu au moyen d'une purification par distillation de IPDI normal.

5. Procédé selon la revendication 1-3,
**caractérisé en ce que**
pour la trimérisation, on fait intervenir de l'IPDI pauvre en chlore, comportant une teneur totale en chlore inférieure à 80 mg/kg, lequel est obtenu par mélange de IPDI(urée) avec du IPDI normal.

6. Procédé selon la revendication 1-3,
**caractérisé en ce que**
pour la trimérisation, on fait intervenir de l'IPDI(urée).
